# FASCICULE DE BREVET EUROPEEN

(11) **EP 3 146 236 B1**
(45) Date de publication et mention de la délivrance du brevet: **17.11.2021**
(21) Numéro de dépôt: 15718623.0
(22) Date de dépôt: 30.03.2015
(51) Int. Cl.: F16G 1/06, B29D 29/00, F16G 1/08, F16G 1/16

(54) **COURROIE DE TRANSMISSION DE PUISSANCE**
KRAFTÜBERTRAGUNGSBAND
POWER TRANSMISSION BELT

(30) Priorité: 03.04.2014 FR 1452959
(43) Date de publication de la demande: 29.03.2017
(73) Titulaire: Hutchinson, 75008 Paris (FR)
(72) Inventeur: FRANCHINI, Elsa, F-45120 Chalette sur Loing (FR); ROGNON, Julie, F-37540 Saint Cyr sur Loire (FR)
(74) Mandataire: Gevers & Orès
(86) Numéro de dépôt international: PCT/IB2015/052327
(87) Numéro de publication internationale: WO 2015/151010

(56) Documents cités:
- EP-A1- 0 838 605
- WO-A1-2010/066505
- WO-A1-2013/091808
- CN-Y- 201 258 943
- DE-A1-102006 025 562
- GB-A- 2 292 339
- US-A- 3 919 892
- US-A- 4 752 282
- US-A1- 2009 142 572
- None

## Description

La présente invention concerne le domaine des courroies de transmission de puissance.

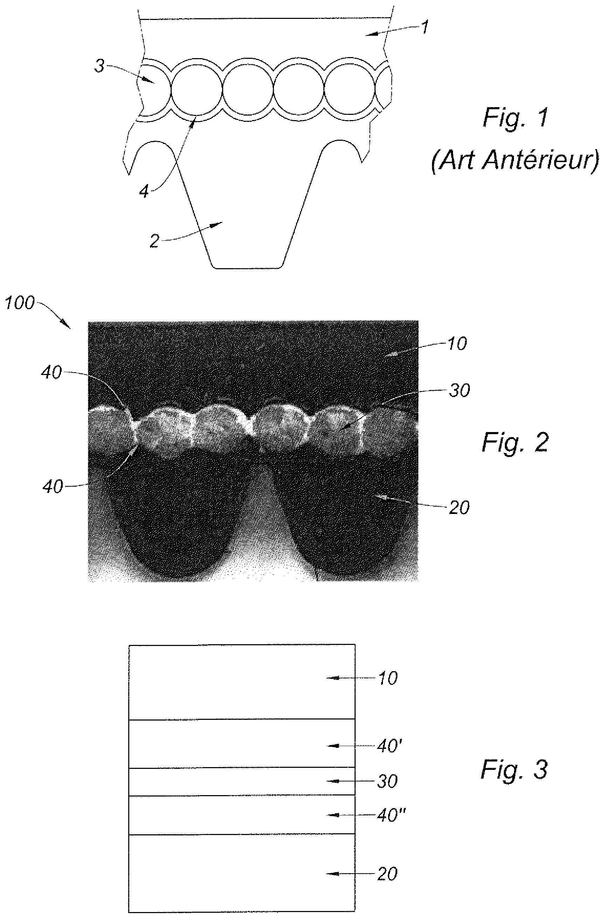

Une telle courroie (CN201258943Y et US4752282A) comprend généralement une couche dorsale 1, une couche ventrale 2 et un moyen 3 de renfort mécanique (figure 1).

La couche ventrale 2, en l'occurrence nervurée, est destinée à être mise en contact avec des poulies. A titre d'exemple, dans le domaine automobile, une courroie peut être montée sur une première poulie reliée à l'axe du moteur et sur une deuxième poulie reliée à un alternateur.

Le moyen 3 de renfort mécanique est généralement un câblé multi-fils, même si d'autres types de renfort sont possibles comme un renfort tissé, un renfort tricoté ou autre. De manière générale, le moyen 3 de renfort mécanique permet d'assurer la transmission de puissance de la courroie. Il est le plus souvent formé en un matériau, tel que des polyesters (polyéthylène téréphtalate (PET), polyéthylène naphtalate (PEN), polyester aromatique (PEAR)), polyamide, aramide (polyamide aromatique) ou fibres de verre.

La couche dorsale 1 et la couche ventrale 2 peuvent être réalisées en un matériau élastomérique à base d'éthylène alpha oléfine (caoutchouc).

Pour fabriquer une telle courroie, les étapes principales sont les suivantes :
a') la couche dorsale 1, le moyen 3 de renfort mécanique et la couche ventrale 2 sont empilées pour confectionner une ébauche de courroie non vulcanisée ; puis,
b') une vulcanisation de l'ébauche est effectuée dans un moule pour solidariser les différentes couches de l'ébauche de courroie ;

Pour assurer la cohésion entre la couche dorsale 1, le moyen 3 de renfort mécanique et la couche ventrale 2 après vulcanisation, une colle de type Résorcinol Formaldéhyde Latex (RFL ; référencé 4) est déposée sur le câblé avant l'étape a'). Le RFL est obtenu par condensation d'une préparation en phase aqueuse (solution liquide) à base de résine thermodurcissable et de latex. Après séchage, la phase élastomérique du latex se lie avec la résine, thermodurcissable (le RFL forme donc un réseau interpénétré élastomère/résine thermodurcissable), et permet alors une adhésion au moyen de renfort 3. Lorsque le moyen 3 de renfort mécanique se présente sous la forme d'un câblé composé de plusieurs fils, le RFL permet en outre d'assurer une cohésion externe entre les différents fils.

La vulcanisation de l'ensemble (composants 1, 2, 3 et 4) permet la cohésion définitive. En effet, lors de la vulcanisation de la courroie, les ingrédients de vulcanisation des caoutchoucs (couches ventrale 1 et dorsale 2) migrent dans la phase élastomérique du RFL, réticulent le RFL pour finalement créer une adhésion entre ces couches dorsale 1 et ventrale 2 avec le moyen de renfort 3, préalablement traité par le RFL.

La présence d'une colle de type RFL est aujourd'hui indispensable pour assurer la cohésion de la courroie et lui assurer une durée de vie satisfaisante.

Cependant, la présence de Formaldéhyde dans le RFL pose aujourd'hui des difficultés compte tenu des contraintes environnementales.

En effet, les fabricants de courroies cherchent à s'affranchir du RFL à base de formaldéhyde, tout en maintenant les propriétés mécaniques particulièrement avantageuses que ceux-ci confèrent à la durée de vie d'une courroie.

Un objectif de l'invention est ainsi de proposer une courroie de transmission de puissance limitant la présence de RFL au niveau du moyen de renfort mécanique, voire supprimant cette présence.

Un autre objectif de l'invention est de proposer un procédé de fabrication d'une telle courroie.

Pour résoudre l'un au moins de ces objectifs, l'invention propose une courroie de transmission de puissance comprenant :
- une couche dorsale réalisée en un matériau à comportement élastomérique ;
- une couche ventrale réalisée en un matériau à comportement élastomérique;
- un moyen de renfort mécanique, par exemple en matériau thermoplastique, interposé entre la couche dorsale et la couche ventrale;
caractérisée en ce qu'elle comprend un film à transformation thermoplastique entourant le moyen de renfort mécanique, ledit film comprenant au moins :
- un premier composant lié physiquement et/ou chimiquement avec au moins un composant de la couche dorsale ;
- un deuxième composant lié physiquement et/ou chimiquement avec au moins un composant du moyen de renfort mécanique ; et
- un troisième composant lié physiquement et/ou chimiquement avec au moins un composant de la couche ventrale.

L'invention pourra également comprendre l'une au moins des caractéristiques suivantes, prises seules ou en combinaison :
- la couche dorsale est réalisée en un matériau à comportement élastomérique à base d'éthylène alpha oléfine ou à base d'un TPV oléfinique et en ce que le premier composant du film à transformation thermoplastique est choisi parmi les homopolymères ou copolymères d'oléfine, par exemple du polyéthylène tels que LDPE ou HDPE ;
- la couche dorsale est réalisée en un matériau à comportement élastomérique à base de polybutadiène (BR) ou à base de copolymère styrène-butadiène (SBR) et en ce que le premier composant du film à transformation thermoplastique est choisi parmi les homoplymères ou copolymères styréniques, par exemple du polystyrène-b-poly(éthylène-butylène)-b-polystyrène (SEBS) et/ou du polystyrène-b-polybutadiène-b-polystyrène (SBS) ;
- la couche dorsale est réalisée en un matériau à comportement élastomérique à base de polyisoprène ou à base de caoutchouc naturel (NR) et en ce que le premier composant du film à transformation thermoplastique est du polystyrène-b-polyisoprène-b-polystyrène (SIS) ;
- la couche dorsale est réalisée en un matériau à comportement élastomérique à base d'un copolymère à bloc éther et ester (COPE) et en ce que le premier composant du film à transformation thermoplastique est également un copolymère à bloc éther et ester (COPE) ;
- la couche dorsale est réalisée en un matériau à comportement élastomérique à base d'un copolymère à bloc éther et amide (COPA) et en ce que le premier composant du film à transformation thermoplastique est également un copolymère à bloc éther et amide (COPA) ;
- le moyen de renfort mécanique est réalisé en un matériau choisi parmi un polyamide, un polyester, des fibres de verre ou un matériau à base cellulosique et en ce que le deuxième composant du film à transformation thermoplastique comprend un matériau choisi parmi un polymère contenant au moins un motif constitutif oléfinique et une fonction réactive choisie parmi une fonction anhydride maléique, une fonction glycidyle méthacrylate, une fonction acide acrylique ;
- le motif constitutif oléfinique dudit polymère contenant au moins un motif constitutif oléfinique et une fonction réactive choisie parmi une fonction anhydride maléique, une fonction glycidyle méthacrylate, une fonction acide acrylique est de l'éthylène ;
- le moyen de renfort mécanique est réalisé en polyamide et en ce que le deuxième composant du film à transformation thermoplastique comprend un copolymère à bloc éther et amide (COPA) ;
- le moyen de renfort mécanique est réalisé en polyester et en ce que le deuxième composant du film à transformation thermoplastique comprend un copolymère à bloc éther et ester (COPE) ;
- la couche ventrale est réalisée en un matériau à comportement élastomérique à base d'éthylène alpha oléfine ou à base d'un TPV oléfinique et en ce que le troisième composant du film à transformation thermoplastique est choisi parmi les homopolymères ou copolymères d'oléfine, par exemple du polyéthylène tels que LDPE ou HDPE ;
- la couche ventrale est réalisée en un matériau à comportement élastomérique à base de polybutadiène (BR) ou à base de copolymère styrène-butadiène (SBR) et en ce que le troisième composant du film à transformation thermoplastique est choisi parmi les homoplymères ou copolymères styréniques, par exemple du polystyrène-b-poly(éthylène-butylène)-b-polystyrène (SEBS) et/ou du polystyrène-b-polybutadiène-b-polystyrène (SBS) ;
- la couche ventrale est réalisée en un matériau à comportement élastomérique à base de polyisoprène ou à base de caoutchouc naturel (NR) et en ce que le troisième composant du film à transformation thermoplastique est du polystyrène-b-polyisoprène-b-polystyrène (SIS) ;
- la couche ventrale est réalisée en un matériau à comportement élastomérique à base d'un copolymère à bloc éther et ester (COPE) et en ce que le troisième composant du film à transformation thermoplastique est également un copolymère à bloc éther et ester (COPE) ;
- la couche ventrale est réalisée en un matériau à comportement élastomérique à base d'un copolymère à bloc éther et amide (COPA) et en ce que le troisième composant du film à transformation thermoplastique est également un copolymère à bloc éther et amide (COPA) ;
- la couche dorsale et la couche ventrale sont réalisées en un matériau à comportement élastomérique à base identique ;
- la couche dorsale et la couche ventrale sont réalisées en un matériau à comportement élastomérique à base d'éthylène alpha oléfine ; le moyen de renfort mécanique est réalisé en polyamide ; le film à transformation thermoplastique comprend un premier composant formé d'un homopolymère ou copolymère d'oléfine, un deuxième composant formé d'un copolymère à bloc éther et amide (COPA) et/ou d'un polymère contenant au moins un motif constitutif oléfinique et une fonction réactive choisie parmi une fonction anhydride maléique, une fonction glycidyle méthacrylate, une fonction acide acrylique ; un troisième composant formé d'un homopolymère ou copolymère d'oléfine ;
- le polyamide est choisi parmi : PA66, PA46, PA6, polyamide aromatique ;
- le moyen de renfort mécanique est un câblé multi-fils, un tissé, un non tissé ou un tricot ;
- la liaison entre le film à transformation thermoplastique et l'une au moins de la couche dorsale ou de la couche ventrale implique une liaison chimique par co-réticulation ;
- la courroie elle comprend, en outre : un film complémentaire à transformation thermoplastique, recouvrant la couche ventrale et, une couche textile recouvrant le film complémentaire, le film complémentaire comportant : un premier composant lié physiquement et/ou chimiquement avec au moins un composant de la couche ventrale; un deuxième composant lié physiquement et/ou chimiquement avec au moins un composant de la couche textile ;
- la liaison entre le film complémentaire et la couche ventrale implique une liaison chimique par co-réticulation.

Pour atteindre l'un au moins de ces objectifs, l'invention propose également un procédé de fabrication d'une courroie de transmission de puissance, caractérisé en ce qu'il comprend les étapes suivantes:
a") agencer, à l'état cru, un empilement comportant :
   - une couche dite dorsale ;
   - un premier film à transformation thermoplastique, doublant la couche dorsale, et comportant un composant capable, pendant l'étape b"), de créer une liaison physique et/ou chimique avec au moins un composant de la couche dorsale et un autre composant capable, pendant l'étape b"), de créer une liaison physique et/ou chimique avec au moins un composant d'un moyen de renfort mécanique, par exemple en matériau thermoplastique;
   - le moyen de renfort mécanique ;
   - une couche dite ventrale ;
   - un deuxième film à transformation thermoplastique, doublant la couche ventrale, et comportant un composant capable de créer une liaison physique et/ou chimique avec au moins un composant de la couche ventrale et un autre composant capable de créer une liaison physique et/ou chimique avec au moins un composant du moyen de renfort mécanique ;
   cet empilement formant une ébauche de courroie ;
b") mouler et vulcaniser l'ébauche de courroie, cette étape impliquant la formation d'un film thermoplastique entourant le moyen de renfort mécanique à partir de la fluidification desdits premier et deuxième films pour assurer la liaison physique et/ou chimique entre ledit film à transformation thermoplastique d'une part et, la couche dorsale, la couche ventrale et le moyen de renfort mécanique d'autre part.

Le procédé pourra comprendre, en outre, les étapes suivantes :
- l'un au moins des deux films à transformation thermoplastique présente des moyens auto-agrippants pour améliorer l'accrochage mécanique du moyen de renfort mécanique, en particulier lorsque ce moyen de renfort mécanique est un câblé multi-fils ;
- les deux films à transformation thermoplastique présentent des moyens auto-agrippants orientés en direction du moyen de renfort mécanique.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 2 représente une vue de coupe d'une courroie conforme à l'invention, obtenue après fabrication.
- la figure 3 représente, selon une vue en coupe, un schéma représentatif d'une ébauche de la courroie de la figure 2 avant la vulcanisation (état cru), à savoir au cours de la fabrication ;
- la figure 4 représente une vue en coupe longitudinale d'une ébauche de la courroie de la figure 2, cette ébauche étant conforme au schéma représenté sur la figure 3 ;
- la figure 5 représente une vue en coupe transversale de la figure 4, réalisée au niveau d'un plan de coupe A-A ;
- la figure 6 représente, selon une vue schématique, l'ébauche de la figure 4 selon une vue en perspective partielle ;
- la figure 7 est un schéma conforme au schéma de la figure 3, sur lequel sont précisés différents matériaux envisageables ;
- la figure 8 représente, selon une vue en coupe, un schéma représentatif d'une ébauche de courroie similaire à celle de la figure 2, mais comportant en plus une couche textile externe recouvrant la couche ventrale et destinée à être au contact de poulies d'un système d'entraînement.

Une courroie de transmission de puissance conforme à l'invention est représentée sur la figure 2.

Elle comporte une couche dorsale 10 en un matériau à comportement élastomérique à base d'éthylène alpha oléfine (par base, il convient de comprendre que la couche dorsale comprend au moins 30% en poids de d'éthylène alpha oléfine), une couche ventrale 20 en un matériau à comportement élastomérique à base d'éthylène alpha oléfine (la base de la couche ventrale 20 est donc identique à la base de la couche dorsale 10), en l'occurrence de forme nervurée, un moyen 30 de renfort mécanique, par exemple en matériau thermoplastique, noyé ou interposé entre la couche dorsale 10 et la couche ventrale 20 et, un film 40 à transformation thermoplastique entourant le moyen 30 de renfort mécanique.

Par film 40 à transformation thermoplastique, on entend un film 40 formé d'un matériau choisi parmi les thermoplastiques (TP), les alliages de thermoplastiques, les thermoplastiques élastomériques (TPE) ou les TPV qui sont des thermoplastiques élastomériques où la phase élastomérique est réticulée.

Le film 40 à transformation thermoplastique comprend par ailleurs au moins :
- un premier composant lié physiquement et/ou chimiquement avec au moins un composant de la couche dorsale 10 ; et
- un deuxième composant lié physiquement et/ou chimiquement avec au moins un composant du moyen 30 de renfort mécanique ;
- un troisième composant lié physiquement et/ou chimiquement avec au moins un composant de la couche ventrale 20.

De ce fait, pendant la vulcanisation, une adhésion, par la liaison physique et/ou chimique, est générée entre le moyen 30 de renfort et le film 40 d'une part, et entre ce film 40 à transformation thermoplastique et les couches ventrale 20 et dorsale 10.

Pendant la vulcanisation, une co-réticulation par les ingrédients de vulcanisation des couches 10 et 20, par exemple des peroxydes, peut compléter l'adhésion entre ces couches 10, 20 et le film 40 à transformation thermoplastique.

La durée de vie de la courroie peut alors être comparable à une courroie de transmission de puissance comportant un traitement isocyanate, un RFL et une préparation assurant le collant de confection.

La courroie de transmission de puissance représentée sur la figure 2 présente la composition suivante.

La couche dorsale 10 est réalisée en EPDM.

La couche ventrale 20, nervurée, est réalisée en EPDM.

Le moyen 30 de renfort mécanique est un câblé multi-fils dont les fils sont en polyamide.

Le premier composant du film 40 à transformation thermoplastique est un polyéthylène basse densité (LDPE).

Le deuxième composant du film 40 à transformation thermoplastique est connu sous le nom commercial PEBAX. Il s'agit d'un copolymère à bloc éther et amide (COPA) qui contient un motif amide.

Le troisième composant du film 40 à transformation thermoplastique est identique au premier composant, ce qui est envisageable du fait que les couches dorsale 10 et ventrale 20 ont une même base, en l'occurrence d'éthylène alpha oléfine.

Trois compositions chimiques préférentielles (CC) du film 40 à transformation thermoplastique ont été testés pour vérifier l'intérêt de l'invention.

Elles sont résumées dans le tableau 1.

**Tableau 1**

| Composition du film 40 | CC1 | CC2 | CC3 |
|---|---|---|---|
| LDPE (%, en poids) | 60 | 67 | 90 |
| PEBAX (%, en poids) | 40 | 33 | 10 |

Toutes ces compositions (CC1, CC2, CC3) ont permis d'obtenir une courroie telle que celle qui est représentée sur la figure 2.

Plus généralement, les couches ventrale 20 et dorsale 10 peuvent être réalisée avec tout matériau à base d'éthylène alpha oléfine, l'EPDM n'étant qu'une exemple dans cette famille.

Le premier composant du film 40 à transformation thermoplastique (ou ce qui revient au même ici, le troisième composant du film 40 à transformation thermoplastique), lequel est capable, lors de la vulcanisation, de créer une liaison physique et/ou chimique avec tout matériau à base d'éthylène alpha oléfine de la couche dorsale 10 (ou couche ventrale 20), comme l'EPDM, peut être choisi parmi les homopolymères ou copolymères d'oléfines. Avantageusement, il peut s'agir d'un polyéthylène, par exemple polyéthylène basse densité (LDPE) ou un polyéthylène haute densité (HDPE pour « High Density PolyEthylene » selon la terminologie anglo-saxonne).

Quant au deuxième composant du film 40 à transformation thermoplastique, lequel est capable, lors de la vulcanisation, de créer une liaison physique et/ou chimique avec le polyamide du moyen 30 de renfort, peut être choisi parmi :
(a) les polymères contenant un motif constitutif identique à un motif constitutif du renfort ;
   Pour le polyamide, il s'agit d'un copolymère à bloc éther et amide (COPA) qui contient donc un motif Amide comme le polyamide (un exemple est connu sous le nom commercial PEBAX).
   et/ou
(b) les polymères contenant au moins un motif constitutif oléfinique et une fonction réactive, cette fonction réactive pouvant être choisie dans la liste suivante :
   ▪ fonction anhydride maléique,
   ▪ fonction glycidyle méthacrylate,
   ▪ fonction acide acrylique

Le motif constitutif oléfinique peut être de l'éthylène.

Eventuellement, on pourra utiliser, en plus d'un polymère selon (a) ou (b) un terpolymère à blocs polystyrène/polybutadiène-1,4/polyméthacrylate de méthyle, tel que celui qui est connu sous l'acronyme « SBM » et/ou un terpolymère à blocs polyméthacrylate de méthyle/polyacrylate de butyle/méthacrylate de méthyle, tel que celui qui est connu sous la l'acronyme « MAM ». Ceci facilite le mélange des composants (a) et/ou (b) et par la suite la mise en forme du matériau.

En résumé, de manière générale, on peut définir les matériaux suivants :
(A) une couche ventrale 20 et une couche dorsale 10 en matériau élastomérique à base d'éthylène alpha oléfine ;
(B) un moyen 30 de renfort en polyamide ;
(C)un premier composant et, respectivement, un troisième composant du film 40 à transformation thermoplastique défini par au moins un homopolymère ou copolymère d'oléfines, lequel est capable, lors de la vulcanisation, de créer une liaison physique et/ou chimique avec la couche dorsale 10, respectivement la couche ventrale 20 ;
(D) un deuxième composant du film 40 à transformation thermoplastique selon (a) et/ou (b) ci-dessus, lequel est capable, lors de la vulcanisation, de créer une liaison physique et/ou chimique avec le moyen 30 de renfort.

Le tableau 1 ne fournit en effet qu'un exemple.

Le polyamide (PA), lequel est un thermoplastique, peut en particulier, mais non limitativement, être un PA46, PA66, ou PA6. Il peut aussi s'agir d'un polyamide aromatique. Dans ce dernier cas, un COPA en tant que deuxième composant du film 40 à transformation thermoplastique, tel que le produit connu sous le nom commercial PEBAX, est particulièrement bien adapté.

Il convient de noter par ailleurs que le moyen 30 de renfort mécanique peut être un câblé multi-fils réalisé en un matériau autre que le polyamide (PA), sous toutes ses formes.

Ainsi, à la place du polyamide (PA) (cf. (B) ci-dessus), on peut prévoir d'autres thermoplastiques comme du polyester (exemples = polyéthylène téréphtalate (PET), polyéthylène naphtalate (PEN), polyester aromatique) ou des fibres de verre. On peut aussi prévoir un mélange de ceux-ci.

On peut également envisager, à la place du PA, un matériau à base cellulosique. Il peut notamment s'agir de cellulose, de coton ou de viscose ou un mélange de ceux-ci.

En variante, on peut encore envisager un mélange d'un matériau à base cellulosique tels que ceux cités précédemment avec un matériau thermoplastique tels que ceux cités précédemment pour former ce moyen 30 de renfort mécanique.

La nature du matériau en (B) étant modifiée, il convient de s'intéresser aux composants définis en (D) qui sont capables, lors de la vulcanisation, de créer une liaison physique et/ou chimique avec le matériau concerné du moyen 30 de renfort.

Si le moyen 30 de renfort est en polyester, on peut également prévoir un deuxième composant du film 40 à transformation thermoplastique selon (a) et/ou (b) ci-dessus.

Dans le cas (a), il s'agit d'un copolymère à bloc éther et ester (COPE) qui contient donc un motif ester comme le polyester (un exemple est connu sous le nom commercial Keyflex).

Dans le cas (b), il peut notamment s'agir d'un co/ter polymère à base d'éthylène greffé avec une fonction réactive telle que l'anhydride maléique, la glycidyle méthacrylate, l'acide acrylique.

Eventuellement, toujours pour le moyen de renfort 30 en polyester, on pourra utiliser, en plus, un terpolymère à blocs polystyrène/polybutadiène-1,4/polyméthacrylate de méthyle, tel que celui qui est connu sous l'acronyme «SBM » et/ou un terpolymère à blocs polyméthacrylate de méthyle/polyacrylate de butyle/méthacrylate de méthyle, tel que celui qui est connu sous l'acronyme « MAM ».

Si le moyen 30 de renfort est en fibres de verre, on peut prévoir un deuxième composant du film 40 à transformation thermoplastique selon (b) ci-dessus.

Si le moyen 30 de renfort est à base de cellulose, on peut prévoir un deuxième composant du film 40 à transformation thermoplastique selon (b) ci-dessus.

Par ailleurs, dans les cas cités précédemment, nous nous sommes limités au cas où les couches ventrale 20 et dorsale 10 sont réalisées d'un matériau à base d'éthylène alpha oléfine, pour différents matériaux envisageables pour le moyen 30 de renfort et les composants associables du film 40 à transformation thermoplastique.

Les couches ventrale 20 et dorsale 10, à comportement élastomérique, peuvent être réalisées à base d'autres matériaux que les matériaux de la famille éthylène alpha oléfine, parmi lesquels :
- le polybutadiène (plus connu sous l'acronyme BR pour *« Butadiene Rubber»* selon la terminologie anglo-saxonne) et/ou le copolymère styrène-butadiéne (plus connu sous l'acronyme SBR pour « *Styrene-Butadiene Rubber»* selon la terminologie anglo-saxonne);
- le polyisoprène ;
- le caoutchouc naturel (plus connu sous l'acronyme NR pour *« Natural Rubber »* selon la terminologie anglo-saxonne);
- les TPV oléfinique (= matériau thermoplastique élastomérique partiellement ou totalement réticulé);
- les COPE (= copolymère à bloc éther et ester) ;
- les COPA ( = copolymère à bloc éther et amide).

Ainsi, si la nature du matériau formant les couches ventrale 20 et dorsale 10 sont modifiées (cf. (A) ci-dessus), il convient de s'intéresser aux composants du film 40 à transformation thermoplastique définis en (B) qui sont capables, lors de la vulcanisation, de créer une liaison physique et/ou chimique avec le matériau concerné pour ces couches 10, 20.

Si la couche dorsale 10, est réalisée en un matériau à comportement élastomérique à base de BR ou SBR, alors le premier composant du film 40 à transformation thermoplastique capable, lors de la vulcanisation, de créer une liaison physique et/ou chimique avec ces matériaux BR ou SBR peut être un homopolymère ou un copolymère styrénique, par exemple du polystyrène-b-poly(éthylène-butylène)-b-polystyrène (plus connu sous l'acronyme SEBS) et/ou du polystyrène-b-polybutadiène-b-polystyrène (plus connu sous l'acronyme SBS).

Si la couche dorsale 10 est réalisée en un matériau à comportement élastomérique à base de polyisoprène ou de caoutchouc naturel (NR), alors le premier composant du film 40 à transformation thermoplastique capable, lors de la vulcanisation, de créer une liaison physique et/ou chimique avec ces matériaux peut être du polystyrène-b-polyisoprène-b-polystyrène (plus connu sous l'acronyme SIS).

Si la couche dorsale 10 est réalisée en un matériau à comportement élastomérique à base d'un TPV oléfinique, alors le premier composant du film 40 à transformation thermoplastique capable, lors de la vulcanisation, de créer une liaison physique et/ou chimique avec ce matériau est un homopolymère ou copolymère d'oléfine, par exemple le polyéthylène (PE), notamment un polyéthylène basse densité (LDPE).

Si la couche dorsale 10 est réalisée en un matériau à comportement élastomérique à base d'un COPE, alors le premier composant du film 40 à transformation thermoplastique capable, lors de la vulcanisation, de créer une liaison physique et/ou chimique avec ce matériau est également un COPE.

Si la couche dorsale 10 est réalisée en un matériau à comportement élastomérique à base d'un COPA, alors le premier composant du film 40 à transformation thermoplastique capable, lors de la vulcanisation, de créer une liaison physique et/ou chimique avec ce matériau est également un COPA.

Tous les cas décrits ci-dessus permettant de préciser le premier composant du film 40 à transformation thermoplastique en fonction de la nature du matériau formant la base du matériau à comportement élastomérique de la couche dorsale 10 peuvent être transposés au troisième composant du film 40 à transformation thermoplastique en fonction de la nature du matériau formant la base du matériau à comportement élastomérique de la couche ventrale 20.

Pour les différents matériaux évoqués ci-dessus pour former les couches dorsale 10 et ventrale 20, on peut utiliser indifféremment un moyen 30 de renfort en polyamide, polyester, fibres de verre ou à base cellulosique cités précédemment, avec un deuxième composant du film 40 à transformation thermoplastique adéquat, tel que décrit précédemment.

Il convient de noter que, dans tous les cas décrits précédemment, le matériau à comportement élastomérique de la couche ventrale 20 présente une base identique au matériau à comportement élastomérique de la couche dorsale 10. Dans le cas d'une base en éthylène alpha oléfine, la notion de base identique signifie que la couche dorsale 10 comprend au moins 30% en poids d'éthylène alpha oléfine et que la couche ventrale 20 comprend également au moins 30% en poids d'éthylène alpha oléfine.

Cependant, la couche dorsale 10 peut être réalisée en un matériau à comportement élastomérique avec une première base et la couche ventrale 20 peut être réalisée en un matériau à comportement élastomérique avec une deuxième base, la deuxième base étant différente de la première base.

Pour cette raison, le film 40 à transformation thermoplastique comprendra généralement au moins : un premier composant lié physiquement et/ou chimiquement avec au moins un composant de la couche dorsale ; un deuxième composant lié physiquement et/ou chimiquement avec au moins un composant du moyen 30 de renfort mécanique ; et un troisième composant lié physiquement et/ou chimiquement avec au moins un composant de la couche ventrale 20.

Le troisième composant du film 40 à transformation thermoplastique pourra donc être distinct du premier composant du film 40 à transformation thermoplastique, en particulier lorsque la base du matériau à comportement élastomérique de la couche ventrale 20 est distincte de la base du matériau à comportement élastomérique de la couche dorsale 10. Par exemple, la couche dorsale 10 peut être réalisée en un matériau à comportement élastomérique à base d'éthylène alpha oléfine, la couche ventrale 20 en un matériau à comportement élastomérique à base de BR. Dans cet exemple, le premier composant du film 40 à transformation thermoplastique peut être choisi parmi les homopolymères ou copolymères d'oléfine, par exemple du polyéthylène tels que LDPE ou HDPE, et le troisième composant du film 40 à transformation thermoplastique est choisi parmi les homoplymères ou copolymères styréniques. Quant au deuxième composant du film 40 à transformation thermoplastique, il est choisi en fonction du matériau formant le moyen 30 de renfort mécanique.

Cependant, le troisième composant du film 40 à transformation thermoplastique pourra être identique au premier composant du film 40 à transformation thermoplastique, en particulier lorsque la base du matériau à comportement élastomérique de la couche ventrale 20 est identique à la base du matériau à comportement élastomérique de la couche dorsale 10. Le deuxième composant du film 40 à transformation thermoplastique est alors choisi en fonction du matériau formant le moyen 30 de renfort mécanique et, dans certains cas, ce deuxième composant du film 40 à transformation thermoplastique pourra être identique aux premier et troisième composants de ce film 40 (par exemple, si les couches dorsale 10 et ventrale 20 sont réalisées en un matériau à comportement élastomérique à base de COPE et le moyen 30 de renfort mécanique est réalisé en polyester).

Que la base du matériau à comportement élastomérique de la couche ventrale 20 soit différente ou identique à la base du matériau à comportement élastomérique de la couche dorsale 10 n'interdit pas la présence d'autres composants, en particulier des composants réalisés en un matériau à comportement élastomérique. A titre d'exemple, on pourrait prévoir une couche dorsale 10 dont la base est BR et une couche ventrale 20 avec une même base BR comprenant par ailleurs un autre matériau à comportement élastomérique tels que éthylène alpha oléfine, SBR, NR, COPE, COPA, polyisoprène ou TPV oléfinique.

Le câblé multi-fils peut être remplacé par un tissé, un non tissé ou un tricot, dans la mesure où ce qui importe pour assurer la cohésion entre les différents éléments de la courroie est la compatibilité chimique entre ce moyen 30 de renfort et le film 40 à transformation thermoplastique.

Par ailleurs, la forme nervurée de la couche ventrale 20 n'est pas un facteur limitant. Il peut donc s'agir d'une nervure de forme trapézoïdale, striée ou autre. Par ailleurs, une forme nervurée n'est pas obligatoire. La couche ventrale 20 peut en effet présenter une forme crantée, laquelle permet de définir une courroie synchrone.

Quels que soient les matériaux décrits précédemment, qui sont compatibles pour fabriquer une courroie selon l'invention, la nature des composants compris dans le film 40 à transformation thermoplastique permet de remplacer le RFL. Pour autant, il n'est pas exclu qu'un tel film 40 soit mis en œuvre en combinaison avec du RFL prévu dans le moyen 30 de renfort mécanique, même si finalement il est préférable de s'affranchir totalement de la présence de RFL.

On a représenté sur les figures 3 (schéma), 4 (réel), 5 (réel) et 6 (schéma), la structure d'une ébauche de la courroie de la figure 2, avant vulcanisation.

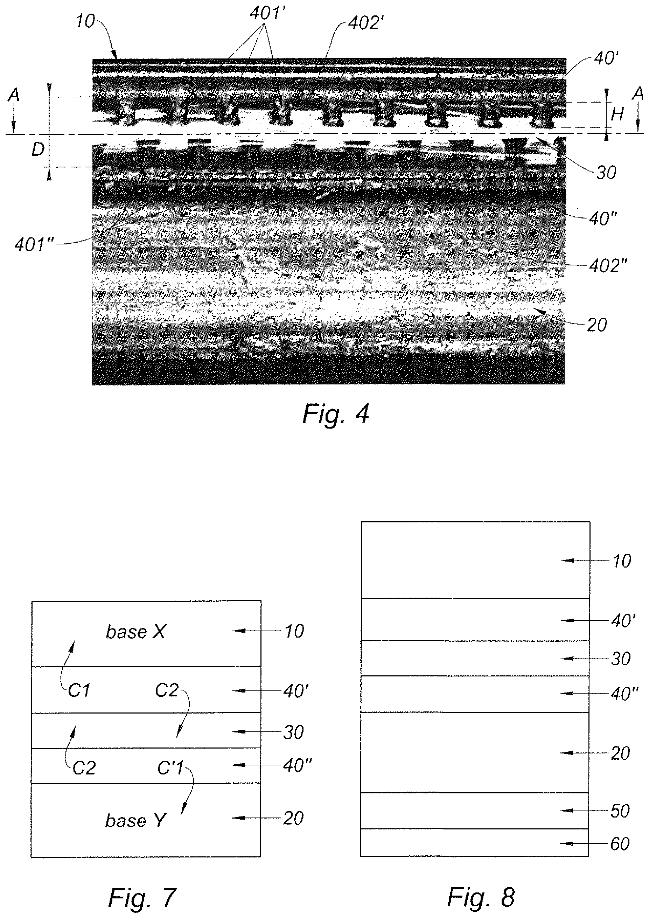

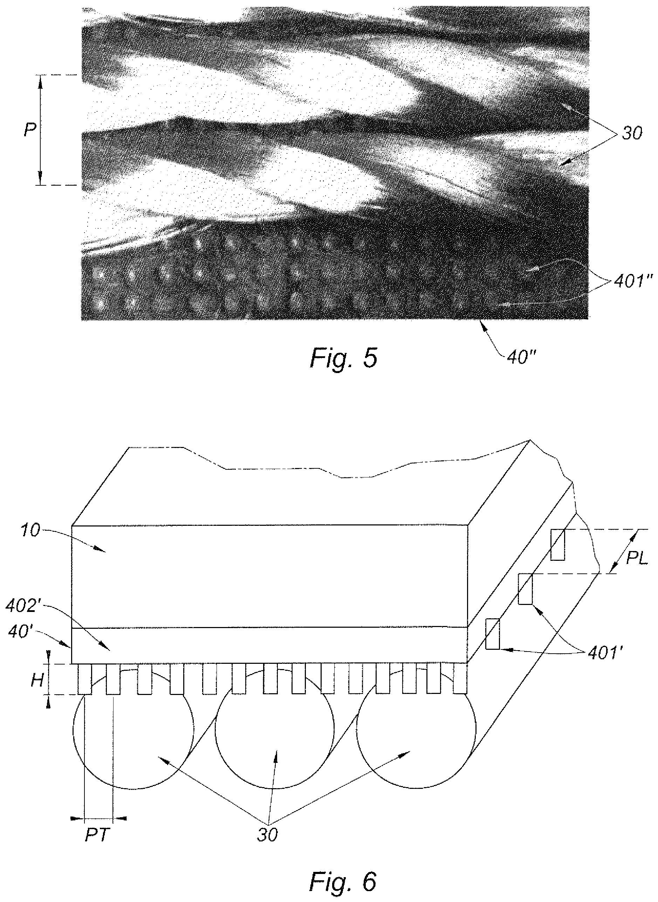

Sur ces figures, on reconnaît la couche dorsale 10, la couche ventrale 20 (pas encore nervurée, cette opération étant réalisée ultérieurement par une étape de moulage, par exemple par un moule, au cours du procédé de fabrication et avant la vulcanisation) et le moyen 30 de renfort mécanique. Sur les figures 4 et 5, on peut d'ailleurs observer les différents fils du moyen 30 de renfort mécanique, lequel est un câblé multi-fils.

En pratique, le film 40 à transformation thermoplastique est obtenu après que l'assemblage confectionné (empilement) de la figure 3 soit soumis à une pression sous une température élevée conduisant à une fluidification des films 40', 40" à transformation thermoplastique qui, en se fluidifiant, viennent enrober le moyen de renfort 30, et le pénètre. Cette fluidification des films 40', 40" adviendra avantageusement au cours de la vulcanisation.

Plus précisément, avant vulcanisation, le film 40' est doublé à chaud avec la couche dorsale 10 et le film 40" avec la partie ventrale 20. Le film 40' est donc celui qui comprend un composant capable, lors de la vulcanisation, de créer une liaison physique et/ou chimique avec au moins un composant de la couche dorsale 10 et un autre composant capable, lors de cette vulcanisation, de créer une liaison physique et/ou chimique avec un composant du moyen 30 de renfort mécanique. Le film 40" est celui qui comprend un composant capable, lors de la vulcanisation, de créer une liaison physique et/ou chimique avec au moins un composant de la couche ventrale 20 et un autre composant capable, lors de la vulcanisation, de créer une liaison physique et/ou chimique avec un composant du moyen 30 de renfort mécanique.

Les deux films 40', 40" sont présentés assemblés et maintenus avec les couches dorsale et ventrale à l'étape de confection. L'étape de confection consiste à déposer l'assemblage (10/40') dans un premier temps, puis à déposer le moyen de renfort 30 et enfin, à déposer l'assemblage (20/40").

Un point à relever est que l'empilement proposé permet d'assurer un collant de confection (« tack » selon la terminologie anglo-saxonne) qui est suffisant pour assurer différentes manipulations avant la vulcanisation.

En effet, pour éviter que le moyen 30 de renfort soit, avant vulcanisation, mal positionné par rapport aux couches dorsale 10 et ventrale 20, il est important de maintenir la solidarité de la confection réalisée.

Dans l'état de la technique, plusieurs approches ont déjà été proposées à cet effet.

Une première approche de l'état de la technique consiste à utiliser du perchloréthylène sur les tours de confection de la courroie. Un inconvénient majeur de cette approche est qu'elle limite en pratique la nature des matériaux envisageables pour former les couche dorsale et ventrale, car ces couches doivent alors présenter une composition spécifique pour interagir avec le perchloréthylène.

Ce n'est pas le cas dans le cadre de l'invention.

En effet, la nature des premier et deuxième composants des films 40', 40" permet d'obtenir un « tack » suffisant, car ces composants sont adaptés à la nature des matériaux formant les couches dorsale 10 et ventrale d'une part, et le moyen 30 de renfort mécanique d'autre part. Par exemple, si les couches dorsale 10 et ventrale 20 sont réalisées en EPDM et le moyen 30 de renfort mécanique en PA, le premier composant des films 40', 40" peut être un LDPE (adapté à l'EPDM et plus généralement à l'éthylène alpha oléfine) et le deuxième composant un PEBAX, adapté au PA.

D'ailleurs, une autre approche de l'état de la technique consistant à réaliser une gaine autour du câblé enduit de RFL met à profit l'utilisation de matériaux adaptés par assurer le « tack ».

Par exemple, si les couches dorsale 1 et ventrale 2 sont réalisées à base d'éthylène alpha oléfine, la gaine du moyen 3 de renfort peut être un élastomère à base d'éthylène alpha oléfine. En pratique, on réalise ainsi un gainage du moyen 3 de renfort par extrusion. Cela permet de réaliser un serrage mécanique de la gaine contre le moyen 3 de renfort. Entre la gaine et les couches dorsale 1 et ventrale 2, un « tack » suffisant est alors obtenu, en raison de la compatibilité des matériaux, tous réalisés à base d'éthylène alpha oléfine, lequel peut être de l'EPDM ou de l'EPM.

L'approche par gainage permet d'utiliser différents matériaux élastomériques pour les couches dorsale 1 et ventrale 2. Il suffit pour cela d'avoir une gaine réalisée en un matériau élastomérique identique à celui formant lesdites couches 1, 2.

Cependant, dans le but d'améliorer le « tack », l'invention propose une solution originale.

En effet, il est possible d'améliorer encore le « tack », en particulier au niveau de l'interface entre les films 40', 40" et le moyen 30 de renfort mécanique, en particulier lorsque ce dernier est formé d'un câblé multi-fils ou multi-filamentaires (ce qui est généralement le cas), en utilisant un auto-agrippant.

Par rapport à la solution perchloréthylène, l'utilisation d'un auto-agrippant est beaucoup plus intéressante sur le plan environnemental et n'est pas limitée à certaines compositions des couches dorsale 10 et ventrale 20. Par ailleurs, par rapport à la solution dite de « gainage », elle ne nécessite pas la mise en œuvre d'une étape supplémentaire dans le procédé de fabrication.

A cet effet, les films 40', 40" comprennent alors des moyens auto-agrippants 401', 401" orientés avantageusement en direction du moyen 30 de renfort mécanique, par exemple perpendiculairement par rapport à une base 402', 402" du film 40', 40" correspondant.

Ces moyens auto-agrippants 401', 401" peuvent présenter des formes variées, leur fonction étant d'assurer un agrippage des films 40', 40" avec le moyen 30 de renfort, en particulier lorsque celui-ci est formé de fils ou filaments. Par exemple, il peut s'agir de crochets, harpons, picots et plus généralement d'excroissances avantageusement orientées en direction du moyen 30 de renfort mécanique.

Ces moyens auto-agrippants 401', 401" sont généralement disposés à intervalles réguliers à la fois dans le plan longitudinal (plan de la figure 4) et le plan transversal (plan de la figure 5). A ce stade du procédé de fabrication, les films 40', 40" se présentent généralement sur une surface plane.

Ces moyens auto-agrippants 401', 401" ont pour fonction d'assurer un accrochage mécanique des fils du moyen 30 de renfort aux films 40', 40".

On améliore ainsi le collant de confection (« tack »).

De plus, la présence de moyens auto-agrippants 401', 401" améliore également le positionnement initial des fils du moyen 30 de renfort mécanique par rapport aux films 40', 40". Ceci est particulièrement intéressant car, incidemment, cela peut permettre de s'affranchir d'un traitement à base de toluène et isocyanate généralement employé pour un moyen de renfort mécanique traité au RFL. Un tel traitement à base de toluène et isocyanate permet en effet, dans l'art antérieur, de pénétrer au cœur des fibres du moyen de renfort pour assurer une cohésion entre ces fibres.

A cet effet, la hauteur H du moyen auto-agrippant, le pas longitudinal PL et le pas transversal PT entre deux moyens auto-agrippants sont ajustés en fonction de la géométrie et de la nature du moyen 30 de renfort (diamètre, retordage, dimensions d'un filament, nature chimique) pour garantir le pas P du moyen 30 de renfort (figure 5). La hauteur H est choisie pour éviter tout flambage. Le pas transversal PT entre deux moyens auto-agrippants permet de gérer le maintien latéral du moyen de renfort. Le pas longitudinal PL entre deux moyens auto-agrippants permet de gérer le maintien du moyen 30 renfort dans le sens longitudinal. En fonction de la géométrie et de la nature du filament, les intervalles PL, PT entre chaque moyen auto-agrippant peuvent être différents selon chacun des plans (c'est le cas sur le schéma de la figure 6).

La présence de moyens auto-agrippants 401', 401" est par ailleurs particulièrement intéressante pour limiter voire supprimer l'application d'un traitement isocyanate qui vise, dans l'état de la technique, à raidir les fils du moyen 30 de renfort mécanique pour éviter d'éventuels problèmes d'effilochage. Avec les moyens auto-agrippants, ce problème est moins présent.

Au final, et comme expliqué précédemment, c'est la température atteinte lors de la vulcanisation qui permet de fluidifier les films 40', 40" pour que ceux-ci s'écoulent autour du câblé 30. Lors de la vulcanisation, les films 40', 40" disparaissent donc pour ne former qu'un seul film de forme continue 40, comme représenté sur la figure 2.

Outre la composition chimique adaptée des films 40' et 40" pour l'application visée, le procédé selon l'invention met donc en œuvre une utilisation des films 40', 40" visant à les transformer en un seul film de forme continue.

Comme cela a été précisé précédemment, la vulcanisation implique avantageusement une co-réticulation du film 40 à transformation thermoplastique en formation avec les couches dorsale 10 et ventrale 20.

Pour la fabrication de la courroie représentée sur la figure 2, la vulcanisation a été effectuée à la température T = 183°C. Plus généralement, une température de vulcanisation comprise entre 150°C à 210°C est envisageable.

Pour résumer, le procédé de fabrication comprend donc les étapes suivantes :
a") agencer, à l'état cru, un empilement comportant :
   - une couche dite dorsale 10 ;
   - un premier film 40' à transformation thermoplastique, doublant la couche dorsale 10, et comportant un composant capable, pendant l'étape b"), de créer une liaison physique et/ou chimique avec au moins un composant de la couche dorsale 10 et un autre composant capable, pendant l'étape b"), de créer une liaison physique et/ou chimique avec au moins un composant d'un moyen 30 de renfort mécanique, par exemple en matériau thermoplastique;
   - le moyen 30 de renfort mécanique ;
   - une couche dite ventrale 20 ;
   - un deuxième film 40" à transformation thermoplastique, doublant la couche ventrale 20, et comportant un composant capable de créer une liaison physique et/ou chimique avec au moins un composant de la couche ventrale 20 et un autre composant capable de créer une liaison physique et/ou chimique avec au moins un composant du moyen 30 de renfort mécanique ;
   cet empilement formant une ébauche de courroie ;
b") mouler et vulcaniser l'ébauche de courroie, cette étape impliquant la formation d'un film 40 à transformation thermoplastique entourant le moyen 30 de renfort mécanique à partir de la fluidification desdits premier et deuxième films 40', 40" pour assurer la liaison physique et/ou chimique entre ledit film 40 à transformation thermoplastique d'une part et, la couche dorsale 10, la couche ventrale 20 et le moyen 30 de renfort mécanique d'autre part.

Ce procédé conforme à l'invention peut être mis en oeuvre pour chaque ensemble de matériaux aptes à créer une liaison physique et/ou chimique décrits précédemment.

La figure 7 représente, selon une vue en coupe, l'ébauche de courroie de la figure 3, sur laquelle il est précisé les différents composants susceptibles de former cette ébauche. Ainsi, la couche dorsale 10 est réalisée avec un matériau à comportement élastomérique à base d'un matériau X. La couche ventrale 20 est réalisé avec un matériau à comportement élastomérique à base d'un matériau Y, Y pouvant être identique ou différent de X. Le film 40' comprend un composant C1 apte à se lier physiquement et/ou chimiquement à la couche dorsale 10, avantageusement avec la base X. Le film 40" comprend un composant C'1 apte à se lier physiquement et/ou chimiquement à la couche ventrale 20, avantageusement avec la base Y ; C'1 pouvant être identique ou non à C1 comme expliqué précédemment. Chacun des deux films 40', 40" comprend également un composant C2 capable de se lier physiquement et/ou chimiquement au moyen 30 de renfort.

La figure 8 représente, selon une vue en coupe, un schéma représentatif d'une ébauche de courroie similaire à celle de la figure 3, mais comportant en plus une couche textile externe 60 recouvrant la couche ventrale 20, par l'intermédiaire d'un film complémentaire.

Le film complémentaire 50 permet la cohésion avec la couche textile 60 et la couche ventrale 20.

Comme cela a été précisé précédemment, la couche ventrale 20 est réalisée en un matériau à comportement élastomérique qui peut être à base d'éthylène alpha oléfine, de BR, de SBR, de polyisoprène, de NR, de TPV oléfinique, de COPE ou de COPA.

La couche textile 60 peut être tissée ou non tissée.

La couche textile 60 pourra être réalisée en un matériau thermoplastique. Parmi les matériaux thermoplastiques envisageables pour former cette couche textile 60, on peut choisir l'un quelconque des matériaux listés précédemment pour le moyen 30 de renfort mécanique, à savoir du polyamide (PA46, PA66, PA6, polyamide aromatique), du polyester (PET, PEN, polyester aromatique), des fibres de verre ou un mélange de ceux-ci.

On peut encore prévoir encore un matériau à base cellulosique (cellulose, coton, viscose ou un mélange de ceux-ci).

On peut aussi prévoir des matériaux bi-composants formés d'un cœur en un premier matériau, par exemple thermoplastique, enrobé par une gaine en un autre matériau, par exemple thermoplastique. Ainsi, on peut envisager, à titre d'exemples, les couples cœur/gaine suivants : PET/PE, PA/PE, fibres de verre/PE, matériau à base cellulosique/PE.

Le film complémentaire 50 est avantageusement réalisé conformément à l'un ou l'autre des films 40', 40" en ce qui concerne la structure.

Concernant cette structure, le film complémentaire 50 peut ainsi être prévue avec ou sans moyens auto-agrippants. Avantageusement, des moyens auto-agrippants seront toutefois prévus sur le film complémentaire. Dans tous les cas, notamment lorsque des moyens auto-agrippants sont prévus, le film complémentaire 50 est agencé, dans l'empilement représenté sur la figure 8, conformément au film 40' représenté sur la figure 4, afin d'être mise au contact de la couche textile 60.

De ce fait, avant vulcanisation, le maintien en position de la couche textile 60 par rapport au film complémentaire 50 est assurée.

Le film complémentaire 50 est également avantageusement réalisé conformément à l'un ou l'autre des films 40', 40" en ce qui concerne les matériaux envisageables.

Ainsi, le film complémentaire 50 est un film à transformation thermoplastique comportant :
- un premier composant capable, lors de la vulcanisation, de créer une liaison physique et/ou chimique avec au moins un composant de la couche ventrale 20 ; et
- un deuxième composant capable, lors de la vulcanisation, de créer une liaison physique et/ou chimique avec au moins un composant de la couche textile 60.

La liaison entre le film complémentaire 50 et la couche ventrale 20 pourra impliquer une liaison chimique par co-réticulation, notamment par les ingrédients de types peroxydes de la couche ventrale 20.

Le premier composant du film complémentaire 50 pourra être un homopolymère ou copolymère d'oléfine (LDPE, par exemple), un homo ou copolymère styrénique (SEBS ou SBS, par exemple), un SIS, un COPE ou encore un COPA en fonction du matériau sur lequel la couche ventrale 20 est basée et, conformément à ce qui a été décrit précédemment pour le film 40.

Le deuxième composant du film complémentaire 50 pourra être choisi selon (a) et/ou (b) en fonction du matériau formant la couche textile 60, comme cela a été décrit précédemment.

Par ce biais, on assure, lors et après vulcanisation, une cohésion entre la couche ventrale 20, le film complémentaire 50 et la couche textile 60, conférant à cette courroie une durée de vie répondant aux exigences. Cette cohésion est réalisée sans la présence de RFL.

## Revendications

1. Courroie de transmission de puissance comprenant :
- une couche dorsale (10) réalisée en un matériau à comportement élastomérique ;
- une couche ventrale (20) réalisée en un matériau à comportement élastomérique ;
- un moyen (30) de renfort mécanique, par exemple en matériau thermoplastique, interposé entre la couche dorsale (10) et la couche ventrale (20) ;
**caractérisée en ce qu'**elle comprend un film (40) à transformation thermoplastique entourant le moyen de renfort mécanique (30), ledit film (40) comprenant au moins :
- un premier composant lié physiquement et/ou chimiquement avec au moins un composant de la couche dorsale (10) ;
- un deuxième composant lié physiquement et/ou chimiquement avec au moins un composant du moyen (30) de renfort mécanique ; et
- un troisième composant lié physiquement et/ou chimiquement avec au moins un composant de la couche ventrale (20).

2. Courroie selon la revendication 1, **caractérisée en ce que** la couche dorsale (10) est réalisée en un matériau à comportement élastomérique à base d'éthylène alpha oléfine ou à base d'un TPV oléfinique et **en ce que** le premier composant du film (40) à transformation thermoplastique est choisi parmi les homopolymères ou copolymères d'oléfine, par exemple du polyéthylène tels que LDPE ou HDPE.

3. Courroie selon la revendication 1, **caractérisée en ce que** la couche dorsale (10) est réalisée en un matériau à comportement élastomérique à base de polybutadiène (BR) ou à base de copolymère styrène-butadiène (SBR) et **en ce que** le premier composant du film (40) à transformation thermoplastique est choisi parmi les homoplymères ou copolymères styréniques, par exemple du polystyrène-b-poly(éthylène-butylène)-b-polystyrène (SEBS) et/ou du polystyrène-b-polybutadiène-b-polystyrène (SBS).

4. Courroie selon la revendication 1, **caractérisée en ce que** la couche dorsale (10) est réalisée en un matériau à comportement élastomérique à base de polyisoprène ou à base de caoutchouc naturel (NR) et **en ce que** le premier composant du film (40) à transformation thermoplastique est du polystyrène-b-polyisoprène-b-polystyrène (SIS).

5. Courroie selon la revendication 1, **caractérisée en ce que** la couche dorsale (10) est réalisée en un matériau à comportement élastomérique à base d'un copolymère à bloc éther et ester (COPE) et **en ce que** le premier composant du film (40) à transformation thermoplastique est également un copolymère à bloc éther et ester (COPE).

6. Courroie selon la revendication 1, **caractérisée en ce que** la couche dorsale (10) est réalisée en un matériau à comportement élastomérique à base d'un copolymère à bloc éther et amide (COPA) et **en ce que** le premier composant du film (40) à transformation thermoplastique est également un copolymère à bloc éther et amide (COPA).

7. Courroie selon l'une des revendications précédentes, **caractérisée en ce que** le moyen (30) de renfort mécanique est réalisé en un matériau choisi parmi un polyamide, un polyester, des fibres de verre ou un matériau à base cellulosique et **en ce que** le deuxième composant du film (40) à transformation thermoplastique comprend un matériau choisi parmi un polymère contenant au moins un motif constitutif oléfinique et une fonction réactive choisie parmi une fonction anhydride maléique, une fonction glycidyle méthacrylate, une fonction acide acrylique.

8. Courroie selon la revendication précédente, **caractérisée en ce que** le motif constitutif oléfinique dudit polymère contenant au moins un motif constitutif oléfinique et une fonction réactive choisie parmi une fonction anhydride maléique, une fonction glycidyle méthacrylate, une fonction acide acrylique est de l'éthylène.

9. Courroie selon l'une des revendications précédentes, **caractérisée en ce que** le moyen (30) de renfort mécanique est réalisé en polyamide et **en ce que** le deuxième composant du film (40) à transformation thermoplastique comprend un copolymère à bloc éther et amide (COPA).

10. Courroie selon l'une des revendications 1 à 8, **caractérisée en ce que** le moyen (30) de renfort mécanique est réalisé en polyester et **en ce que** le deuxième composant du film (40) à transformation thermoplastique comprend un copolymère à bloc éther et ester (COPE).

11. Courroie selon l'une des revendications précédentes, **caractérisée en ce que** la couche ventrale (20) est réalisée en un matériau à comportement élastomérique à base d'éthylène alpha oléfine ou à base d'un TPV oléfinique et **en ce que** le troisième composant du film (40) à transformation thermoplastique est choisi parmi les homopolymères ou copolymères d'oléfine, par exemple du polyéthylène tels que LDPE ou HDPE.

12. Courroie selon l'une des revendications 1 à 10, **caractérisée en ce que** la couche ventrale (20) est réalisée en un matériau à comportement élastomérique à base de polybutadiène (BR) ou à base de copolymère styrène-butadiène (SBR) et **en ce que** le troisième composant du film (40) à transformation thermoplastique est choisi parmi les homoplymères ou copolymères styréniques, par exemple du polystyrène-b-poly(éthylène-butylène)-b-polystyrène (SEBS) et/ou du polystyrène-b-polybutadiène-b-polystyrène (SBS).

13. Courroie selon l'une des revendications 1 à 10, **caractérisée en ce que** la couche ventrale (20) est réalisée en un matériau à comportement élastomérique à base de polyisoprène ou à base de caoutchouc naturel (NR) et **en ce que** le troisième composant du film (40) à transformation thermoplastique est du polystyrène-b-polyisoprène-b-polystyrène (SIS).

14. Courroie selon l'une des revendications 1 à 10, **caractérisée en ce que** la couche ventrale (20) est réalisée en un matériau à comportement élastomérique à base d'un copolymère à bloc éther et ester (COPE) et **en ce que** le troisième composant du film (40) à transformation thermoplastique est également un copolymère à bloc éther et ester (COPE).

15. Courroie selon l'une des revendications 1 à 10, **caractérisée en ce que** la couche ventrale (20) est réalisée en un matériau à comportement élastomérique à base d'un copolymère à bloc éther et amide (COPA) et **en ce que** le troisième composant du film (40) à transformation thermoplastique est également un copolymère à bloc éther et amide (COPA).

16. Courroie selon la revendication 1, **caractérisée en ce que** la couche dorsale (10) et la couche ventrale (20) sont réalisées en un matériau à comportement élastomérique à base identique.

17. Courroie selon la revendication précédente, **caractérisée en ce que** :
- la couche dorsale (10) et la couche ventrale (20) sont réalisées en un matériau à comportement élastomérique à base d'éthylène alpha oléfine ;
- le moyen (30) de renfort mécanique est réalisé en polyamide ;
- le film (40) à transformation thermoplastique comprend :
• un premier composant formé d'un homopolymère ou copolymère d'oléfine,
• un deuxième composant formé d'un copolymère à bloc éther et amide (COPA) et/ou d'un polymère contenant au moins un motif constitutif oléfinique et une fonction réactive choisie parmi une fonction anhydride maléique, une fonction glycidyle méthacrylate, une fonction acide acrylique ;
• un troisième composant formé d'un homopolymère ou copolymère d'oléfine.

18. Courroie selon la revendication précédente, **caractérisée en ce que** le polyamide est choisi parmi : PA66, PA46, PA6, polyamide aromatique.

19. Courroie selon l'une des revendications précédentes, **caractérisée** ne ce que le moyen (30) de renfort mécanique est un câblé mufti-fils, un tissé, un non tissé ou un tricot.

20. Courroie selon l'une des revendications précédentes, **caractérisée en ce que** la liaison entre le film (40) à transformation thermoplastique et l'une au moins de la couche dorsale (10) ou de la couche ventrale (20) implique une liaison chimique par co-réticulation.

21. Courroie selon l'une des revendications précédentes, **caractérisée en ce qu'**elle comprend, en outre :
- un film complémentaire (50) à transformation thermoplastique, recouvrant la couche ventrale (20) et, une couche textile (60) recouvrant le film complémentaire (50), le film complémentaire (50) comportant :
• un premier composant lié physiquement et/ou chimiquement avec au moins un composant de la couche ventrale (20);
• un deuxième composant lié physiquement et/ou chimiquement avec au moins un composant de la couche textile (60).

22. Courroie selon la revendication précédente, **caractérisée en ce que** la liaison entre le film complémentaire (50) et la couche ventrale (20) implique une liaison chimique par co-réticulation.

23. Procédé de fabrication d'une courroie de transmission de puissance, **caractérisé en ce qu'**il comprend les étapes suivantes:
a") agencer, à l'état cru, un empilement comportant :
- une couche dite dorsale (10) ;
- un premier film (40') à transformation thermoplastique, doublant la couche dorsale (10), et comportant un composant capable, pendant l'étape b"), de créer une liaison physique et/ou chimique avec au moins un composant de la couche dorsale (10) et un autre composant capable, pendant l'étape b"), de créer une liaison physique et/ou chimique avec au moins un composant d'un moyen (30) de renfort mécanique, par exemple en matériau thermoplastique;
- le moyen (30) de renfort mécanique ;
- une couche dite ventrale (20) ;
- un deuxième film (40") à transformation thermoplastique, doublant la couche ventrale (20), et comportant un composant capable de créer une liaison physique et/ou chimique avec au moins un composant de la couche ventrale (20) et un autre composant capable de créer une liaison physique et/ou chimique avec au moins un composant du moyen (30) de renfort mécanique ;
cet empilement formant une ébauche de courroie ;
b") mouler et vulcaniser l'ébauche de courroie, cette étape impliquant la formation d'un film (40) à transformation thermoplastique entourant le moyen (30) de renfort mécanique à partir de la fluidification desdits premier et deuxième films (40', 40") pour assurer la liaison physique et/ou chimique entre ledit film (40) à transformation thermoplastique d'une part et, la couche dorsale (10), la couche ventrale (20) et le moyen (30) de renfort mécanique d'autre part.

24. Procédé selon la revendication précédente, **caractérisé en ce que** l'un au moins des deux films (40', 40") à transformation thermoplastique présente des moyens auto-agrippants (401', 401 ") pour améliorer l'accrochage mécanique du moyen (30) de renfort mécanique, en particulier lorsque ce moyen (30) de renfort mécanique est un câblé multi-fils.

25. Procédé selon l'une des revendications 23 ou 24, **caractérisé en ce que** les deux films (40', 40") à transformation thermoplastique présentent des moyens auto-agrippants (401', 401") orientés en direction du moyen (30) de renfort mécanique.

## Patentansprüche

1. Kraftübertragungsriemen, der Folgendes umfasst:
- eine Deckschicht (10), bestehend aus einem Material mit elastomerem Verhalten;
- eine Laufschicht (20), bestehend aus einem Material mit elastomerem Verhalten;
- ein mechanisches Verstärkungsmittel (30), beispielsweise aus thermoplastischem Material, das zwischen der Deckschicht (10) und der Laufschicht (20) eingefügt ist;
**dadurch gekennzeichnet, dass** er eine dünne Schicht (40) zur thermoplastischen Umwandlung umfasst, die das mechanische Verstärkungsmittel (30) umgibt, wobei besagte dünne Schicht (40) zumindest Folgendes umfasst:
- eine erste Komponente, die physikalisch und/oder chemisch mit zumindest einer Komponente der Deckschicht (10) verbunden ist;
- eine zweite Komponente, die physikalisch und/oder chemisch mit zumindest einer Komponente des mechanischen Verstärkungsmittels (30) verbunden ist, und
- eine dritte Komponente, die physikalisch und/oder chemisch mit zumindest einer Komponente der Laufschicht (20) verbunden ist.

2. Riemen nach Anspruch 1, **dadurch gekennzeichnet, dass** die Laufschicht (10) aus einem Material mit elastomerem Verhalten auf Basis von Ethylen-Alpha-Olefin oder eines olefinischen TPV besteht und dass die erste Komponente der dünnen Schicht (40) zur thermoplastischen Umformung unter den Olefin-Homopolymeren oder den Olefin-Copolymeren, beispielsweise Polyethylen wie LDPE oder HDPE, ausgewählt wurde.

3. Riemen nach Anspruch 1, **dadurch gekennzeichnet, dass** die Deckschicht (10) aus einem Material mit elastomerem Verhalten auf Basis von Polybutadien (BR) oder auf Basis eines Styrol-Butadien-Copolymers (SBR) besteht und dass die erste Komponente der dünnen Schicht (40) zur thermoplastischen Umformung unter den Styrol-Homopolymeren oder den Styrol-Copolymeren, beispielsweise Polystyrol-block-Poly(Ethylen-Buten)"block-Polystyrol (SEBS) und/oder Polystyrol-block-Polybutadienblock-Polystyrol (SBS), ausgewählt wurde.

4. Riemen nach Anspruch 1, **dadurch gekennzeichnet, dass** die Deckschicht (10) aus einem Material mit elastomerem Verhalten auf Basis von Polyisopren oder auf Basis von Naturkautschuk (NR) besteht und dass die erste Komponente der dünnen Schicht (40) zur thermoplastischen Umformung Polystyrol-block-Polyisopren-block-Polystyrol (SIS) ist.

5. Riemen nach Anspruch 1, **dadurch gekennzeichnet, dass** die Deckschicht (10) aus einem Material mit elastomerem Verhalten auf Basis eines Ether-Ester-Blockcopolymers (COPE) besteht und dass die erste Komponente der dünnen Schicht (40) zur thermoplastischen Umformung ebenfalls ein Ether-Ester-Blockcopolymer (COPE) ist.

6. Riemen nach Anspruch 1, **dadurch gekennzeichnet, dass** die Deckschicht (10) aus einem Material mit elastomerem Verhalten auf Basis eines Ether-Amid-Blockcopolymers (COPA) besteht und dass die erste Komponente der dünnen Schicht (40) zur thermoplastischen Umformung ebenfalls ein Ether-Amid-Blockcopolymer (COPA) ist.

7. Riemen nach einem der vorstehenden Ansprüche, **dadurch gekennzeichnet, dass** das mechanische Verstärkungsmittel (30) aus einem Material, das aus einem Polyamid, einem Polyester, Glasfasern ausgewählt wurde, oder einem Material auf Cellulosebasis besteht und dass die zweite Komponente der dünnen Schicht (40) zur thermoplastischen Umformung ein Material umfasst, das aus einem Polymer ausgewählt wurde, das zumindest eine olefinische konstitutionelle Repetiereinheit und eine reaktive Funktion, die aus einer Maleinsäureanhydrid-Funktion, einer Glycidylmethacrylat-Funktion, einer Acrylsäurefunktion ausgewählt wurde, umfasst.

8. Riemen nach dem vorstehenden Anspruch, **dadurch gekennzeichnet, dass** die olefinische konstitutionelle Repetiereinheit des besagten Polymers, das zumindest eine olefinische konstitutionelle Repetiereinheit und eine reaktive Funktion enthält, die aus einer Maleinsäureanhydrid-Funktion, einer Glycidylmethacrylat-Funktion, einer Acrylsäurefunktion gewählt wurde, Ethylen ist.

9. Riemen nach einem der vorstehenden Ansprüche, **dadurch gekennzeichnet, dass** das mechanische Verstärkungsmittel (30) aus Polyamid besteht und dass die zweite Komponente der dünnen Schicht (40) zur thermoplastischen Umformung ein Ether-Amid-Blockcolypolymer (COPA) umfasst.

10. Riemen nach einem der Ansprüche 1 bis 8, **dadurch gekennzeichnet, dass** das mechanische Verstärkungsmittel (30) aus Polyester besteht und dass die zweite Komponente der dünnen Schicht (40) zur thermoplastischen Umformung ein Ether-Ester-Blockcolypolymer (COPE) umfasst.

11. Riemen nach einem der vorstehenden Ansprüche, **dadurch gekennzeichnet, dass** die Laufschicht (20) aus einem Material mit elastomerem Verhalten auf Basis von Ethylen-Alpha-Olefin oder auf Basis eines olefinischen TPV besteht und dass die dritte Komponente der dünnen Schicht (40) zur thermoplastischen Umformung aus den Olefin-Homo- oder Copolymeren, beispielsweise Polyethylen wie LPDE oder HDPE, ausgewählt wurde.

12. Riemen nach einem der Ansprüche 1 bis 10, **dadurch gekennzeichnet, dass** die Laufschicht (20) aus einem Material mit elastomerem Verhalten auf Basis von Polybutadien (BR) oder auf Basis eines Styrol-Butadien-Copolymers (SBR) besteht und dass die dritte Komponente der dünnen Schicht (40) zur thermoplastischen Umformung unter den Styrol-Homopolymeren oder den Styrol-Copolymeren, beispielsweise Polystyrol-block-Poly(Ethylen-Buten)-block- Polystyrol (SEBS) und/oder Polystyrol-block-Polybutadien-block-Polystyrol (SBS), ausgewählt wurde.

13. Riemen nach einem der Ansprüche 1 bis 10, **dadurch gekennzeichnet, dass** die Laufschicht (20) aus einem Material mit elastomerem Verhalten auf Basis von Polyisopren oder auf Basis von Naturkautschuk (NR) besteht und dass die dritte Komponente der dünnen Schicht (40) zur thermoplastischen Umformung Polystyrol-block-Polyisopren-block-Polystyrol (SIS) ist.

14. Riemen nach einem der Ansprüche 1 bis 10, **dadurch gekennzeichnet, dass** die Laufschicht (20) aus einem Material mit elastomerem Verhalten auf Basis eines Ether-Ester-Blockcopolymers (COPE) besteht und dass die dritte Komponente der dünnen Schicht (40) zur thermoplastischen Umformung ebenfalls ein Ether-Ester-Blockcopolymer (COPE) ist.

15. Riemen nach einem der Ansprüche 1 bis 10, **dadurch gekennzeichnet, dass** die Laufschicht (20) aus einem Material mit elastomerem Verhalten auf Basis eines Ether-Amid-Blockcopolymers (COPA) besteht und dass die dritte Komponente der dünnen Schicht (40) zur thermoplastischen Umformung ebenfalls ein Ether-Amid-Blockcopolymer (COPA) ist.

16. Riemen nach Anspruch 1, **dadurch gekennzeichnet, dass** die Deckschicht (10) und die Laufschicht (20) aus einem Material mit elastomerem Verhalten auf identischer Basis besteht.

17. Riemen nach dem vorstehenden Anspruch, **dadurch gekennzeichnet, dass**:
- die Deckschicht (10) und die Laufschicht (20) aus einem Material mit elastomerem Verhalten auf Basis von Ethylen-Alpha-Olefin bestehen;
- das mechanische Verstärkungsmittel (30) aus Polyamid besteht;
- die dünne Schicht (40) zur thermoplastischen Umformung Folgendes umfasst:
• eine erste Komponente, die aus einem Olefin-Homopolymer oder einem Olefin-Copolymer gebildet ist,
• eine zweite Komponente, die aus einem Ether-Amid-Blockcopolymer (COPA) und/oder einem Polymer, das zumindest eine olefinische konstitutionelle Repetiereinheit und eine reaktive Funktion enthält, die aus einer Maleinsäureanhydridfunktion, einer Glycidylmethacrylatfunktion, einer Acrylsäurefunktion ausgewählt wurde, gebildet ist;
• eine dritte Komponente, die aus einem Olefin-Homopolymer oder einem Olefin-Copolymer gebildet ist.

18. Riemen nach dem vorstehenden Anspruch, **dadurch gekennzeichnet, dass** das Polyamid ausgewählt wurde aus: PA66, PA46, PA6, aromatisches Polyamid.

19. Riemen nach einem der vorstehenden Ansprüche, **dadurch gekennzeichnet, dass** das mechanische Verstärkungsmittel (30) ein mehrfädiger Reifencord, ein Gewebe, ein Vlies oder ein Gewirk ist.

20. Riemen nach einem der vorstehenden Ansprüche, **dadurch gekennzeichnet, dass** die Verbindung zwischen der dünnen Schicht (40) zur thermoplastischen Umformung und zumindest einer der Deckschicht (10) oder der Laufschicht (20) eine chemische Verbindung durch Covernetzung betrifft.

21. Riemen nach einem der vorstehenden Ansprüche, **dadurch gekennzeichnet, dass** er unter anderem Folgendes umfasst:
- eine zusätzliche dünne Schicht (50) zur thermoplastischen Umformung, die die Laufschicht (20) bedeckt, und eine Textilschicht (60), die die zusätzliche dünne Schicht (50) bedeckt, wobei die zusätzliche dünne Schicht (50) Folgendes umfasst:
• eine erste Komponente, die physikalisch und/oder chemisch mit zumindest einer Komponente der Laufschicht (20) verbunden ist;
• eine zweite Komponente, die physikalisch und/oder chemisch mit zumindest einer Komponente der Textilschicht (60) verbunden ist.

22. Riemen nach dem vorstehenden Anspruch, **dadurch gekennzeichnet, dass** die Verbindung zwischen der zusätzlichen dünnen Schicht (50) und der Laufschicht (20) eine chemische Verbindung durch Covernetzung betrifft.

23. Verfahren der Herstellung eines Kraftübertragungsriemens, **dadurch gekennzeichnet, dass** es die folgenden Schritte umfasst:
a") Anordnen eines Stapels im Rohzustand, der Folgendes umfasst:
- eine Schicht, die so genannte Deckschicht (10);
- eine erste dünne Schicht (40') zur thermoplastischen Umformung, die die Deckschicht (10) verstärkt und eine Komponente, die in der Lage ist, während des Schritts b") eine physikalische und/oder chemische Verbindung mit zumindest einer Komponente der Deckschicht (10) zu bilden, und eine andere Komponente, die in der Lage ist, während des Schritts b") eine physikalische und/oder chemische Verbindung mit zumindest einer Komponente eines mechanischen Verstärkungsmittels (30), beispielsweise aus thermoplastischem Material, zu bilden, umfasst;
- das mechanische Verstärkungsmittel (30);
- eine Schicht, die so genannte Laufschicht (20);
- eine zweite dünne Schicht (40") zur thermoplastischen Umformung, die die Laufschicht (20) verstärkt und eine Komponente, die in der Lage ist, eine physikalische und/oder chemische Verbindung mit zumindest einer Komponente der Laufschicht (20) zu bilden, und eine andere Komponente, die in der Lage ist, eine physikalische und/oder chemische Verbindung mit zumindest einer Komponente des mechanischen Verstärkungsmittels (30) zu bilden, umfasst;
wobei dieser Stapel einen Riemenrohling bildet;
b") Formen und Vulkanisieren des Riemenrohlings, wobei dieser Schritt die Bildung einer dünnen Schicht (40) zur thermoplastischen Umformung betrifft, die, ausgehend von der Verflüssigung besagter ersten und zweiten dünnen Schicht (40', 40"), das mechanische Verstärkungsmittel (30) umgibt, um die physikalische und/oder chemische Verbindung zwischen der besagten dünnen Schicht (40) zur thermoplastischen Umformung einerseits und der Deckschicht (10), der Laufschicht (20) und dem mechanischen Verstärkungsmittel (30) andererseits sicherzustellen.

24. Verfahren nach dem vorstehenden Anspruch, **dadurch gekennzeichnet, dass** zumindest eine der zwei dünnen Schichten (40', 40") zur thermoplastischen Umformung selbsthaftende Mittel (401', 401") zur Verbesserung der mechanischen Anhaftung des mechanischen Verstärkungsmittels (30) aufweist, insbesondere, wenn es sich bei diesem mechanischen Verstärkungsmittel (30) um einen mehrfädigen Reifencord handelt.

25. Verfahren nach einem der Ansprüche 23 oder 24, **dadurch gekennzeichnet, dass** die beiden dünnen Schichten (40', 40") zur thermoplastischen Umformung selbsthaftende Mittel (401', 401") aufweisen, die zum mechanischen Verstärkungsmittel (30) hin ausgerichtet sind.

## Claims

1. A power transmission belt comprising:
- a backing layer (10) made in a material with an elastomeric behavior;
- a ventral layer (20) made in a material with an elastomeric behavior;
- a mechanical reinforcement means (30), for example a thermoplastic material, interposed between the backing layer (10) and the ventral layer (20);
**characterized in that** it comprises a film (40) with thermoplastic transformation surrounding the mechanical reinforcement means (30), said film (40) comprising at least:
- one first component physically and/or chemically bound with at least one component of the backing layer (10);
- one second component physically and/or chemically bound with at least one component of the mechanical reinforcement means (30); and
- one third component physically and/or chemically bound with at least one component of the ventral layer (20).

2. The belt according to claim 1, **characterized in that** the backing layer (10) is made in a material with elastomeric behavior based on alpha-olefin-ethylene or based on an olefin TPV and **in that** the first component of the film (40) with thermoplastic transformation is selected from olefin homopolymers or copolymers, for example polyethylene such as LDPE or HDPE.

3. The belt according to claim 1, **characterized in that** the backing layer (10) is made in a material with elastomeric behavior based on polybutadiene (BR) or based on styrene-butadiene copolymer (SBR) and **in that** the first component of the film (40) with thermoplastic transformation is selected from styrene homopolymers or copolymers, for example polystyrene-b-poly(ethylene-butylene)-b-polystyrene (SEBS) and/or polystyrene-b-polybutadiene-b-polystyrene (SBS).

4. The belt according to claim 1, **characterized in that** the backing layer (10) is made in a material with elastomeric behavior based on polyisoprene or based on natural rubber (NR) and **in that** the first component of the film (40) with thermoplastic transformation is polystyrene-b-polyisoprene-b-polystyrene (SIS).

5. The belt according to claim 1, **characterized in that** the backing layer (10) is made in a material with elastomeric behavior based on a copolymer with ether and ester blocks (COPE) and **in that** the first component of the film (40) with thermoplastic transformation is also a copolymer with ether and ester blocks (COPE).

6. The belt according to claim 1, **characterized in that** the backing layer (10) is made in a material with elastomeric behavior based on a copolymer with ether and amide blocks (COPA) and **in that** the first component of the film (40) with thermoplastic transformation is also a copolymer with ether and amide blocks (COPA).

7. The belt according to one of the preceding claims, **characterized in that** the mechanical reinforcement means (30) is made in a material selected from among a polyamide, a polyester, glass fibers or a material based on cellulose and **in that** the second component of the film (40) with thermoplastic transformation comprises a material selected from among a polymer containing at least one olefin constitutive unit and a reactive function selected from among a maleic anhydride function, a glycidyl methacrylate function, an acrylic acid function.

8. The belt according to the preceding claim, **characterized in that** the olefin constitutive unit of said polymer contains at least one olefin constitutive unit and a reactive function selected from among a maleic anhydride function, a glycidyl methacrylate function, an acrylic acid function is ethylene.

9. The belt according to one of the preceding claims, **characterized in that** the mechanical reinforcement means (30) is made in polyamide and **in that** the second component of the film (40) with thermoplastic transformation comprises a copolymer with ether and amide blocks (COPA).

10. The belt according to one of claims, **characterized in that** the mechanical reinforcement means (30) is made in polyester and **in that** the second component of the film (40) with thermoplastic transformation comprises a copolymer with ether and ester blocks (COPE).

11. The belt according to one of the preceding claims, **characterized in that** the ventral layer (20) is made in a material with elastomeric behavior based on alpha-olefin-ethylene or based on olefin TPV and **in that** the third component of the film (40) with thermoplastic transformation is selected from among olefin homopolymers or copolymers, for example polyethylene such as LDPE or HDPE.

12. The belt according to one of claims 1 to 10, **characterized in that** the ventral layer (20) is made in a material with elastomeric behavior based on polybutadiene (BR) or based on styrene-butadiene copolymer (SBR) and **in that** the third component of the film (40) with thermoplastic transformation is selected from among styrene homopolymers or copolymers, for example polystyrene-b-poly(ethylene-butylene)-b-polystyrene (SEBS) and/or polystyrene-b-polybutadiene-b-polystyrene (SBS).

13. The belt according to one of claims 1 to 10, **characterized in that** the ventral layer (20) is made in a material with elastomeric behavior based on polyisoprene or based on natural rubber (NR) and **in that** the third component of the film (40) with thermoplastic transformation is polystyrene-b-polyisoprene-b-polystyrene (SIS).

14. The belt according to one of claims 1 to 10, **characterized in that** the ventral layer (20) is made in a material with elastomeric behavior based on a copolymer with ether and ester blocks (COPE) and **in that** the third component of the film (40) with thermoplastic transformation is also a copolymer with ether and ester blocks (COPE).

15. The belt according to one of claims 1 to 10, **characterized in that** the ventral layer (20) is made in a material with elastomeric behavior based on a copolymer with ether and amide blocks (COPA) and **in that** the third component of the film (40) with thermoplastic transformation is also a copolymer with ether and amide blocks (COPA).

16. The belt according to claim 1, **characterized in that** the backing layer (10) and the ventral layer (20) are made in a material with elastomeric behavior with an identical basis.

17. The belt according to the preceding claim, **characterized in that**:
- the backing layer (10) and the ventral layer (20) are made in a material with elastomeric behavior based on alpha-olefin-ethylene;
- the mechanical reinforcement means (30) is made in polyamide;
- the film (40) with thermoplastic transformation comprises:
• a first component formed with an olefin homopolymer or copolymer,
• a second component formed with a copolymer with ether and amide blocks (COPA) and/or with a polymer containing at least one olefin constitutive unit and a reactive function selected from among a maleic anhydride function, a glycidyl methacrylate function, an acrylic acid function;
• a third component formed with an olefin homopolymer or copolymer.

18. The belt according to the preceding claim, **characterized in that** the polyamide is selected from among: PA66, PA46, PA6, aromatic polyamide.

19. The belt according to one of the preceding claims, **characterized in that** the mechanical reinforcement means (30) is a multi-wire cable, a woven, a nonwoven or a knit.

20. The belt according to one of the preceding claims, **characterized in that** the bond between the film (40) with thermoplastic transformation and at least one of the backing layer (10) or of the ventral layer (20) involves a chemical bond by joint cross-linking.

21. The belt according to one of the preceding claims, **characterized in that** it further comprises:
- a complementary film (50) with thermoplastic transformation, covering the ventral layer (20) and a textile layer (60) covering the complementary film (50), the complementary film (50) including:
• a first component physically and/or chemically bound with at least one component of the ventral layer (20);
• a second component physically and/or chemically bound with at least one component of the textile layer (60).

22. The belt according to the preceding claim, **characterized in that** the bond between the complementary film (50) and the ventral layer (20) involves a chemical bond by joint cross-linking.

23. A method for manufacturing a power transmission belt, **characterized in that** it comprises the following steps:
a") laying out, in the crude condition, a stack including:
- a so-called backing layer (10);
- a first film (40') with thermoplastic transformation, lining the backing layer (10), and including a component capable, during step b"), of generating a physical and/or chemical bond with at least one component of the backing layer (10) and another component capable, during step b"), of generating a physical and/or chemical bond with at least one component of a mechanical reinforcement means (30), for example in thermoplastic material;
- the mechanical reinforcement means (30);
- a so called ventral layer (20);
- a second film (40") with thermoplastic transformation, lining the ventral layer (20), and including a component capable of generating a physical and/or chemical bond with at least one component of the ventral layer (20) and another component capable of generating a physical and/or chemical bond with at least one component of the mechanical reinforcement means (30);
this stack forming a belt blank;
b") molding and vulcanizing the belt blank, this step involving the formation of a film (40) with thermoplastic transformation surrounding the mechanical reinforcement means (30) from the fluidification of said first and second films (40', 40") for ensuring the physical and/or chemical bond between said film (40) with thermoplastic transformation on the one hand and the backing layer (10), the ventral layer (20) and the mechanical reinforcement means (30) on the other hand.

24. The method according to the preceding claim, **characterized in that** at least one of both films (40', 40") with thermoplastic transformation has self-gripping means (401', 401") for improving the mechanical adhesion of the mechanical reinforcement means (30), in particular when this mechanical reinforcement means (30) is a multi-wire cable.

25. The method according to one of claims 23 or 24, **characterized in that** both films (40', 40") with thermoplastic transformation has self-gripping means (401', 401") oriented towards the mechanical reinforcement means (30).
